# EUROPÄISCHE PATENTSCHRIFT

(11) **EP 2 093 038 B1**
(45) Veröffentlichungstag und Bekanntmachung des Hinweises auf die Patenterteilung: **29.12.2010**
(21) Anmeldenummer: 09000758.4
(22) Anmeldetag: 21.01.2009
(51) Int. Cl.: B29C 41/06, B29C 41/34, B29C 33/34

(54) **Rotationsformanlage**
Rotation molding assembly
Installation de formage rotatif

(30) Priorität: 25.02.2008 DE 102008010887
(43) Veröffentlichungstag der Anmeldung: 26.08.2009
(73) Patentinhaber: Ernst Reinhardt GmbH, 78048 Villingen-Schwenningen (DE)
(72) Erfinder: Reinhardt, Eugen, 78048 Villingen-Schwenningen (DE)
(74) Vertreter: Patentanwälte Westphal, Mussgnug & Partner

(56) Entgegenhaltungen:
- EP-A- 0 855 258
- GB-A- 1 334 331
- GB-A- 2 171 047

## Beschreibung

Die Erfindung betrifft eine Rotationsformanlage mit den im Oberbegriff des Patentanspruchs 1 angegebenen Baugruppen.

Derartige Anlagen dienen der Herstellung von Kunststoffhohlkörpern in Hohlformen, die von einem Formrahmen getragen werden. Während des Herstellungsprozesses werden die Hohlformen mit Kunststoffpulver oder Sinterpulver gefüllt und im Sinterofen bei langsamer Drehbewegung des Formrahmens erwärmt. Nach Aufschmelzen und gleichmäßiger Verteilung des Pulvers in der Hohlform wird der Formrahmen in eine Kühlkammer gebracht, in welcher die Hohlform gleichfalls bei Drehung des Formrahmens abgekühlt wird. Anschließend wird die Form in einer Entformstation geöffnet, um den Kunststoffhohlkörper zu entnehmen.

Die Erfindung geht aus von einer aus GB-A-1 334 331 bekannten Rotationsformanlage. Diese Anlage weist kreisförmig angeordnete Baugruppen, nämlich einen Sinterofen, eine Kühlkammer sowie eine Entformstation und eine im Mittelpunkt des Kreises angeordnete, um eine vertikale Achse verdrehbare Beschickungsvorrichtung mit vier radial abstehenden Armen auf. Diese Arme sind mit einem Drehantrieb ausgestattet und tragen an ihren Enden die Formträger. Diese werden während des Herstellungsprozesses, also sowohl während des Sintervorganges im Sinterofen als auch während der Kühlung in den Kühlkammern, in Drehbewegung gehalten. Zum Einbringen der Formrahmen mit den Hohlformen in den Sinterofen bzw. in die Kühlkammern sind letztere in radialer Richtung verfahrbar. Da die Formrahmen mit den Hohlformen während des Schmelzprozesses bzw. des Kühlvorganges mit den Armen der Beschickungsvorrichtung verbunden sind, bleiben der Sinterofen bzw. die Kühlkammer stets offen, was zu hohen Energieverlusten führt. Da die vier Arme außerdem an der Beschickungsvorrichtung fest angebracht sind, richtet sich der Arbeitstakt der Rotationsformanlage nach dem langsamsten Vorgang im Sinterofen bzw. der Kühlkammer.

Der vorliegenden Erfindung liegt die Aufgabe zu Grunde, die bekannte Rotationsformanlage so zu gestalten, dass diese Nachteile vermieden werden.

Konstruktiv gelöst wird diese Aufgabe ausgehend von der aus GB-A-1 334 331 bekannten Rotationsformanlage mit den gemäß Anspruch 1 gekennzeichneten Merkmalen.

Nach diesem Vorschlag sind, Sinterofen, Kühlkammern und Entformstation so ausgebildet, dass die von einem Manipulator getragenen Formrahmen nach Einbringen in die genannten Stationen von diesem abgekoppelt werden können, worauf Sinterofen und Kühlkammer mit Türen verschließbar sind. Manipulator, Sinterofen und Kühlkammern weisen mit den Formrahmen verbindbare eigene Drehvorrichtung auf. Bei dieser Konstruktion lässt sich die Verweildauer der Formrahmen in den einzelnen Stationen individuell einstellen, so dass erforderlichenfalls auch ein Formrahmen von einem anderen Formrahmen während des Herstellungsprozesses überholt werden kann, so dass eine optimale Auslastung der Rotationsformanlage möglich ist. Ein weiterer Vorteil ist, dass die Antriebsmotoren sowie Antriebsmechaniken wie Zahnräder, Antriebsketten mit ihren Lagern für die Drehvorrichtungen thermisch nicht belastet werden, da diese am Manipulator bzw. außerhalb der Heiz- bzw. Kühlkammern angeordnet sind.

Da der Formrahmen während des Transfers von dem direkt beheizten Sinterofen in eine der beiden Kühlkammern mittels der am Manipulator vorgesehenen Drehvorrichtung in Drehbewegung gehalten wird, wird das Kollabieren des Produktes in der Hohlform vermieden.

Der Vorschlag, einen Manipulator nur zum Einbringen in den Sinterofen, die Kühlkammer und die Entformstation zu verwenden, letztere aber mit eigenen Drehvorrichtungen, an welche die Formträger angekoppelt werden, auszustatten, so dass Heiz- und Kühlkammer während des Bearbeitungsprozesses mit Türen verschlossen werden können, ist grundsätzlich aus EP 0 855 258 B1 bekannt.

Die in dieser Druckschrift beschriebene Anlage, bei welcher der Sinterofen zur Vergleichmäßigung des Ausgangsmaterials um eine horizontale Achse in Drehbewegung zu versetzen und bei welcher der Manipulator zum Beladen der Heizkammer bzw. der Kühlkammern unter diese zu verfahren sind, ist aus Platzgründen für größer dimensionierte, insbesondere lange Hohlformen wenig geeignet. Eine weitere Anlage mit drehbaren Manipulatoren ist aus der GB2171047 bekannt.

Mit der vorliegenden Erfindung wird darum vorgeschlagen, die aus EP 0 855 258 B1 bekannte Konfiguration auf die in GB 1 334 331 beschriebenen Anlage zu übertragen, was zu der mit den Ansprüchen 1 bis 3 im Einzelnen gekennzeichneten Neukonstruktion des Manipulators führt.

Nach dem Vorschlag gemäß Anspruch 4 kann der Manipulator mit seiner verdrehbaren vertikalen Säule auf einem in Längsrichtung auf Geleisen verfahrbaren Schlitten angeordnet sein, so dass mit ihm beidseitig der Geleise angeordnete Sinteröfen und/oder Kühlkammern sowie eine am Kopf der Geleise angeordnete Entformstation mit Formrahmen beschickbar sind. Hierdurch lässt sich der Durchsatz der Rotationsformanlage und damit ihre Wirtschaftlichkeit wesentlich erhöhen.

Konstruktive Gestaltungen von Sinterofen und Kühlkammern sind Gegenstand der Ansprüche 5 bis 7.

Nach den Vorschlägen gemäß den Ansprüchen 8 und 9 ist die Entformstation so gestaltet, dass das Entformen mittels desselben Manipulators möglich ist.

Der Gegenstand der Erfindung ist nachstehend anhand von Ausführungsbeispielen, die in den Zeichnungen schematisch dargestellt sind, im Einzelnen erläutert. In den Zeichnungen zeigen
- Figur 1: erfindungsgemäße Rotationsformanlage nach einem ers- ten Ausführungsbeispiel in Draufsicht,
- Figur 2: Rotationsformanlage gemäß Figur 1 in teilweise ge- schnittener Seitenansicht,
- Figur 3: Sinterofen der erfindungsgemäßen Rotationsformanlage in teilweise geschnittener Vorderansicht,
- Figur 4: Sinterofen gemäß Figur 3 in vergrößerter Darstellung,
- Figur 5: Sinterofen gemäß Figur 4 in teilweise geschnittener Vorderansicht,
- Figur 6: Vorderansicht der Entformstation in folgenden Positi- onen:
Figur 6.1 in Entformstation eingesetzter Formträger,
Figur 6.2 Darstellung gemäß Figur 6.1 bei blockierter unterer Formhälfte,
Figur 6.3 Darstellung gemäß Figur 6.2 bei abgehobener Formhälfte,
- Figur 7: Aufsicht der Entformstation gemäß Figur 6,
- Figur 8: erfindungsgemäße Rotationsformanlage nach einem zwei- ten Ausführungsbeispiel in Draufsicht,
- Figur 9: Rotationsformanlage gemäß Figur 8 in teilweise ge- schnittener Darstellung,
- Figur 10: vergrößertes Detail X aus Figur 9,
- Figur 11: erfindungsgemäße Rotationsformanlage nach einem drit- ten Ausführungsbeispiel in Draufsicht und
- Figur 12: teilweise geschnittene Frontansicht der beiden neben- einander angeordneten Sinteröfen gemäß Figur 11.

In den Figuren bezeichnen, sofern nicht anderes angegeben, gleiche Bezugszeichen gleiche Teile.

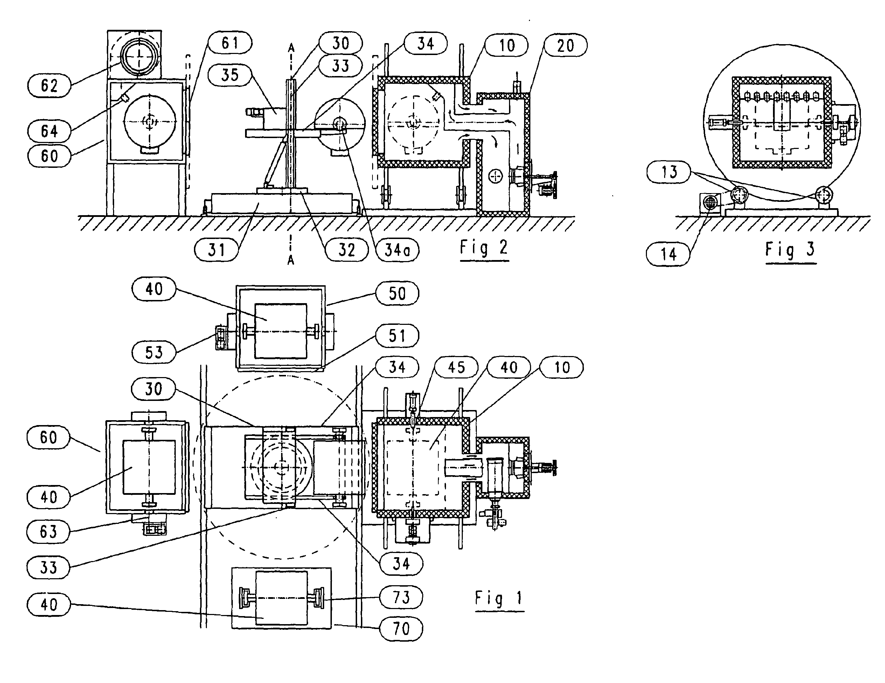

Mit den Figuren 1 bis 3 ist der grundsätzliche Aufbau der erfindungsgemäßen Rotationsformanlage veranschaulicht. Diese besteht aus einem Sinterofen 10, Kühlkammern 50, 60, einer Entformstation 70 und einem Manipulator 30, wobei Sinterofen 10 Kühlkammern 50, 60 sowie Entformstation 70 auf einem gedachten Kreis angeordnet sind, in deren Mittelpunkt sich der Manipulator 30 befindet. Mittels des Manipulators 30 werden Formrahmen 40 mit den von diesem getragenen Hohlformen nacheinander in den Sinterofen 10, eine der beiden Kühlkammern 50 bzw. 60 und die Entformstation 70 eingebracht bzw. diesen wieder entnommen. Der Sinterofen 10, die Kühlkammern 50, 60 sowie der Manipulator 30 besitzen erste Drehvorrichtungen sowie Spannvorrichtung zur drehbaren und rotierbaren Aufnahme eines Formrahmens 40, der die zur Herstellung von Kunststoffgegenständen erforderlichen Hohlformen trägt.

Der Aufbau und die Funktionsweise der identisch ausgebildeten ersten Drehvorrichtungen für den Sinterofen 10 und die Kühlkammern 50 und 60 ist anhand der Figuren 3 bis 5 erläutert. Ferner ist der Sinterofen 10 mit einer weiteren Drehvorrichtung zur Rotation des Formträgers 40 um eine zur Achse der ersten Drehvorrichtung senkrechten Achse ausgestattet, die gleichfalls in den Figuren 3 bis 5 dargestellt ist.

Der Manipulator 30 weist ein Paar von radial verfahrbaren, mit Zahnstangenantrieb versehenen Armen 34 auf, deren freie Enden 34a mit nach oben offenen Kupplungsaufnahmen zum Aufnehmen und Ankuppeln der seitlich abstehenden Achsen 45 des Formrahmens 40 ausgestattet sind. Die radial verfahrbaren Arme 34 sind höhenverstellbar an dem vertikalen Ständer 33 angeordnet. Der Ständer 33 seinerseits ist auf einem um die vertikale Achse A-A verdrehbaren Drehteller 32 angeordnet. Der Drehteller 32 mit dem vertikalen Ständer 33 ist auf der Oberseite eines bei diesem Ausführungsbeispiel ortsfesten Gehäuses 31 gelegen. Das Gehäuse 31 enthält den Drehantrieb des Manipulators.

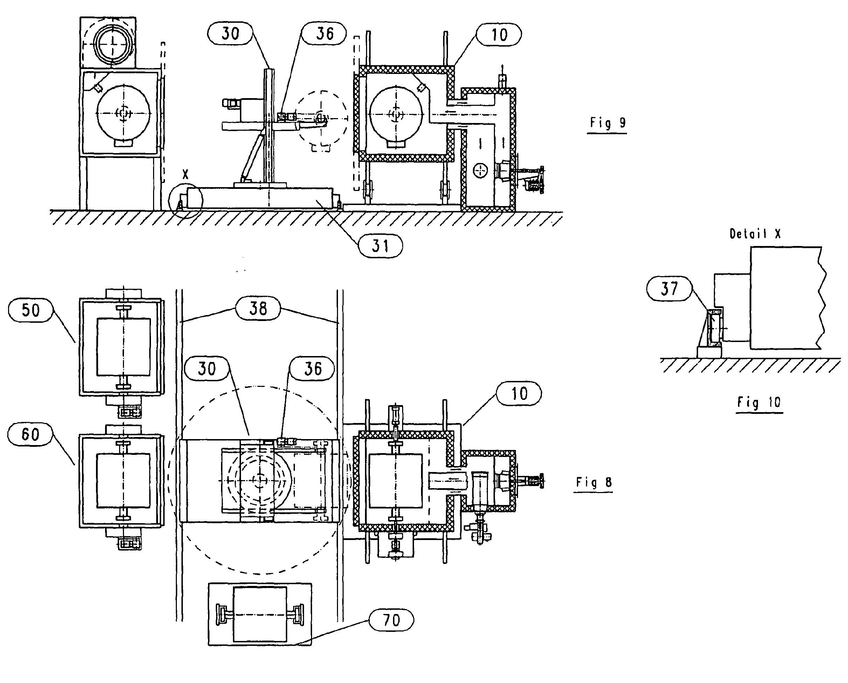

Die Arme 34 sind mit einer Drehvorrichtung, deren Antriebsmotor 36 bei dem Ausführungsbeispiel gemäß Figur 8 und 9 angedeutet ist, mit pneumatisch betätigbaren Spannvorrichtungen für den Formrahmen 40 ausgerüstet. Der weitere Antriebsmotor 35 am hinteren Ende der Arme 34 dient der Hubbewegung der Arme 34.

Mit einem derartigen Manipulator 30 können Sinterofen 10, Kühlkammern 50, 60 sowie Entformstation 70 mit den die Hohlformen tragenden Formrahmen 40 nacheinander in beliebiger Reihenfolge beschickt bzw. entladen werden, wobei der Manipulator 30 entsprechend positioniert und die Arme 34 nach Öffnen der Ofentüren 11 bzw. Kammertüren 51 bzw. 61 ein- und ausgefahren werden können. Da der Sinterofen 10, die Kühlkammern 50, 60 und der Manipulator 30 elektromotorisch betätigte Drehvorrichtungen mit pneumatisch betätigbaren Spannvorrichtungen für den Formrahmen 40 besitzen, können letztere ständig in Drehbewegungen gehalten werden, um eine gleichmäßige Verteilung des Rohmaterials während der Schmelz- und Kühlvorgänge zu gewährleisten.

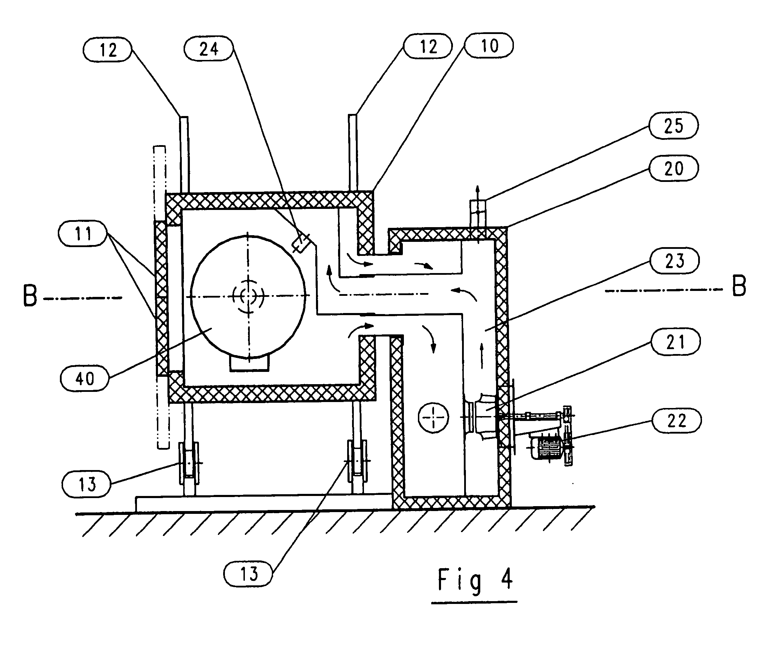

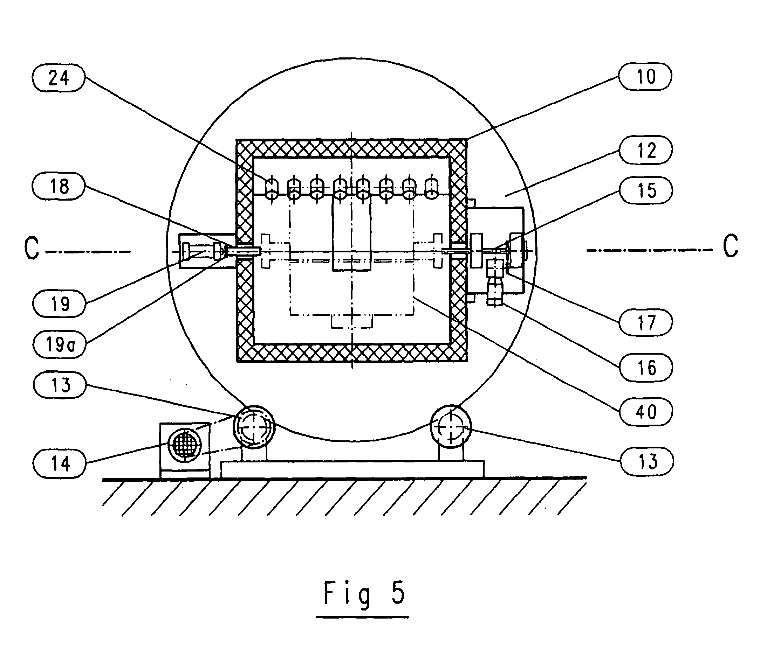

Anhand der vergrößerten Darstellungen gemäß Figur 4 und 5 ist der Aufbau des Sinterofens 10 im Einzelnen erläutert.

Der Sinterofen ist auf seiner dem Manipulator 30 zugewandten Seite mit nach oben und unten in die strichpunktierten Position verschiebbaren Türflügeln 11 verschlossen. Mit an der Sinterofenkammer parallel zueinander angeordneten Antriebsscheiben 12 ist er auf paarweise angeordneten Rollen 13 gelagert, wobei eines der beiden Rollenpaare von einem Elektromotor 14 über eine Kette 14a in Drehbewegung um die in Figur 4 eingezeichnete Achse B-B versetzt werden kann.

Innerhalb des Sinterofens 10 ist der die Hohlformen tragende Formenrahmen 40 um die Achse C-C drehbar gelagert. Der Aufbau von Formrahmen mit eingespannten Hohlformen ist genauer in EP 0 855 258 B1 beschrieben.

Dem Drehantrieb des Formrahmens 40 um die Achse C-C dient der außerhalb der Kammer gelegene Motor 16, der mit der Antriebswelle 15 über eine Antriebskette 17 betrieblich verbunden ist. Der Herstellung der Drehverbindung des Formrahmens 40 mit dem Antriebsmotor 16 dient der Pneumatikzylinder 19, dessen Stößel 19a das axial verschiebbare Spannelement 18 gegen die Achse des Formrahmens 40 drückt.

Durch Überlagerung der Drehbewegungen um die Achsen B-B und C-C wird eine gleichmäßige Verteilung des Kunststoff- bzw. Sinterpulvers in der vom Formrahmen 40 gehaltenen Form erreicht.

Der direkten Beheizung der Kammer des Sinterofens 10 dient die stationäre heiße Belüftungseinrichtung 20, deren Auslass in die Kammer des Sinterofens mündet, wobei eine Dichtung, vorzugsweise eine Lamellendichtung, am Auslassende für einen gasdichten Abschluss sorgt. Die von einem nicht dargestellten Brenner erzeugte Heißluft wird mittels eines vom Motor 22 angetriebenen Ventilators 21 umgewälzt und über Heißluftkanäle 23 und die Heißluftdüsen 24 in das Innere des Sinterofens 10 eingeblasen. Der Kreislauf der Heißluft ist mit den Pfeilen a angedeutet. Überschüssige Heißluft kann über den Auslass 25 abgeblasen werden.

Im Prinzip ähnlich aufgebaut sind die Kühlkammern 50 und 60. Auch diese sind mit zweiflügligen Kammertüren 51, 61 verschließbar. Mittels des Manipulators 30 ist jeweils ein Formrahmen 40 bei geöffneten Kammertüren 51, 61 in das Innere der Kühlkammern 50, 60 einführbar. Wie im Zusammenhang mit dem Sinterofen beschrieben ist der Formrahmen 40 mittels einer Dreh- und Spannvorrichtung 53, 63 verbindbar und wird von dieser während des Kühlprozesses in Rotation gehalten. Auf der Oberseite der Kühlkammer 50, 60 angeordnete Gebläse, z. B. 62, blasen über Düsen 64 Kühlluft in das Kammerinnere.

Nach Beendigung des Kühlvorganges und Öffnen der Kammertüren 51 bzw. 61 wird der Formrahmen 40 mittels des Manipulators 30 herausgenommen und nach einer Drehung um die vertikale Achse A-A zur Entformstation 70 gebracht.

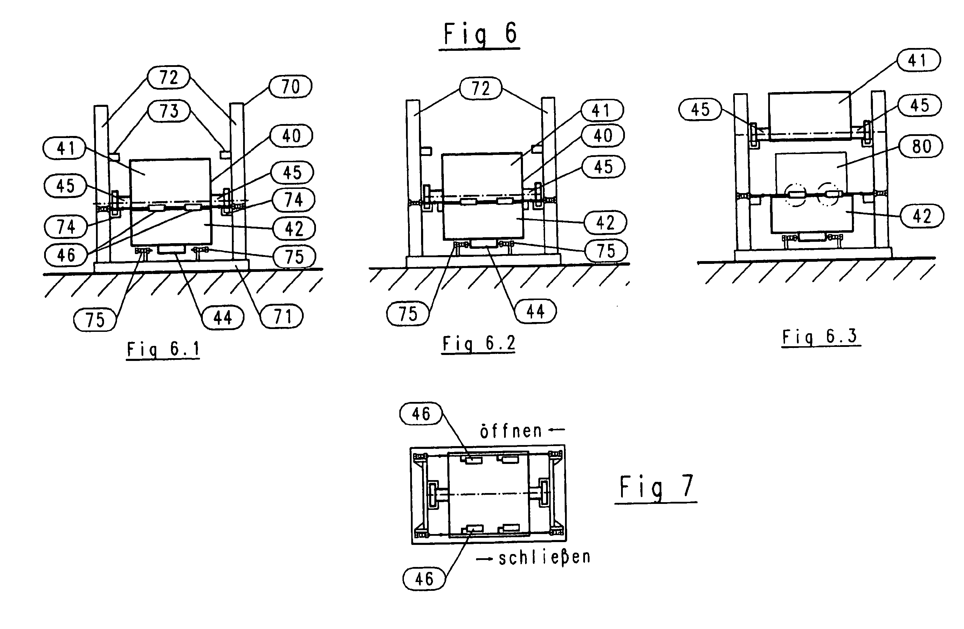

Die Entformstation und der Formrahmen sind so gestaltet, dass mittels des Manipulators 30 die Entformung möglich ist. Dieser Vorgang ist anhand der Figuren 6 und 7 im Einzelnen erläutert.

Im Wesentlichen besteht die Entformstation aus zwei im Abstand voneinander auf einer Basisplatte 71 stehenden vertikalen Stützen 72 mit nach innen gerichteten Paaren von Auflagern 73 und 74.

Mittels des nach Art eines Gabelstaplers arbeitenden Manipulators 30, dessen Arme 34 die beidseitigen Achsen 45 des Formrahmens 40 untergreifen, wird der Formrahmen 40 auf den unteren Stützen 74 der Entformstation 70 abgelegt. An der unteren Seite des Formrahmens 40 ist ein Riegelelement 44 vorgesehen, das, wie aus Figur 6.2 erkennbar ist, mittels vorzugsweise pneumatisch quer verschiebbarer Verriegelungsbolzen 75 betätigbar ist.

Der Formrahmen 40 ist zweigeteilt in eine obere Formhälfte 41 und eine untere Formhälfte 42. Diese sind mit schieberartigen Verschlüssen 46 miteinander verbunden. Wie mit der Aufsicht in Figur 7 angedeutet, ist die Verbindung der Formhälfte durch Querverschieben der Verschlüsse 46 zu öffnen bzw. zu verschließen. Auch dies kann z. B. mittels des Manipulators automatisch erfolgen.

Nachdem der Formrahmen 40 mittels der Verriegelungsbolzen 75 mit der Basisplatte 71 fest verbunden ist, wie mit Figur 6.2 dargestellt ist, sind die Schieber in der mit Figur 7 angedeuteten Weise zu öffnen, worauf die obere Formhälfte 41 mittels des Manipulators 30 abgehoben und mit ihren seitlich abstehenden Achsen 45 in den oberen Auflagern 73 abgelegt werden kann. Hierauf kann das fertige Produkt 80 aus der unteren Formhälfte 42 entnommen werden.

Weitere Gestaltungsmöglichkeiten der erfindungsgemäßen Rotationsformanlage sind mit den Figuren 8 bis 10 bzw. 11 und 12 veranschaulicht.

Während bei der Anordnung gemäß Figur 1 die Kühlkammer 50 der Entformstation 70 gegenüberliegend vorgesehen ist, ist diese bei dem Ausführungsbeispiel gemäß Figur 8 neben der zweiten Kühlkammer 60 angeordnet. Auch in diesem Fall kann die Kühlkammer 50' mittels desselben Manipulators 30 beschickt werden, der in diesem Fall auf am Gehäuse 31 vorgesehenen Laufrollen 37 auf Geleisen 38 längsverschiebbar ist. Damit kann der Manipulator 30 zur Bedienung der Kühlkammer 50' verfahren werden.

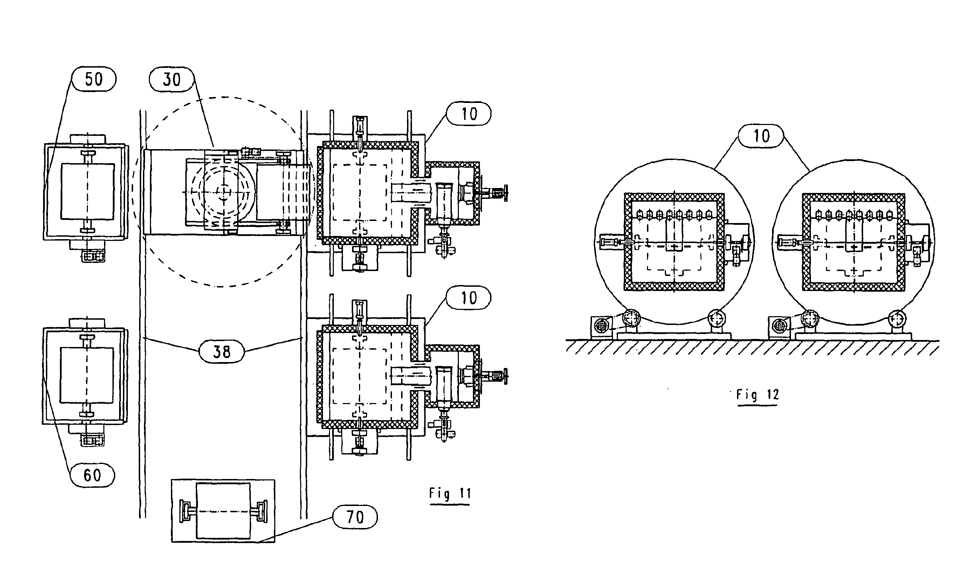

Bei dem weiteren Ausführungsbeispiel gemäß Figur 11 und 12 ist zusätzlich ein weiterer Sinterofen 10' vorgesehen, der gleichfalls vom selben Manipulator 30 bedienbar ist.

Mit dieser Gestaltung ist ein optimaler Einsatz der Rotationsanlage mit hoher Produktivität und bei bester Raumausnutzung möglich.

### Bezugszeichenliste

- 10: Sinterofen
- 11: Türflügel
- 12: Antriebsscheiben
- 13: Lagerrolle
- 14: Antriebsmotor
- 14a: Kette
- 15: Antriebswelle
- 16: Antriebsmotor
- 17: Getriebe
- 18: Spannelement
- 19: Pneumatikzylinder
- 19a: Stößel
- 20: Heiß- und Belüftungseinrichtung
- 21: Ventilator
- 22: Ventilatormotor
- 23: Heißluftkanäle
- 24: Heißluftdüsen
- 25: Auslass

- 30: Manipulator
- 31: Gehäuse
- 32: Drehteller
- 33: vertikaler Ständer
- 34: Arme
- 34a: freie Enden der Arme 34
- 35: Antriebsmotor
- 36: Antriebsmotor
- 37: Laufrollen
- 38: Geleise

- 40: Formrahmen
- 41: obere Formhälfte
- 42: untere Formhälfte
- 43:
- 44: Riegelelement
- 45: Achse
- 46: Verschlüsse

- 50: Kühlkammer
- 51: Kammertür
- 53: Dreh- und Spannvorrichtung

- 60: Kühlkammer
- 61: Kammertür
- 62: Kühlgebläse
- 63: Dreh- und Spannvorrichtung
- 64: Düsen

- 70: Entformstation
- 71: Basisplatte
- 72: Stützen
- 73: Auflager
- 74: Auflager
- 75: Verriegelungsbolzen

- 80: Produkt

## Patentansprüche

1. Rotationsformanlage mit mindestens einem Sinterofen, einer Kühlkammer, einer Entformstation und einer Beschickungsvorrichtung, die um eine vertikale Achse verdrehbar ist und wenigstens einen radial abstehenden Arm mit einem Drehantrieb aufweist, welcher einen mit Formen versehenden Formrahmen trägt und diesen in Drehbewegung hält, wobei der Sinterofen, die Kühlkammer und die Entformstation kreisförmig und die Beschickungsvorrichtung im Mittelpunkt des Kreises angeordnet sind,
**dadurch gekennzeichnet, dass** die Beschickungsvorrichtung ein Manipulator (30) mit einem radial verfahrbaren und höhenverstellbaren Arm ist, an dessen freiem Ende (34a) eine Kupplung zur lösbaren Verbindung mit dem Formrahmen (40) vorgesehen ist, dass der Sinterofen (10) und die Kühlkammer (50, 60) erste Drehvorrichtungen mit Spannvorrichtungen (15 bis 19; 53; 63) für die Formrahmen (40) aufnimmt, dass der Sinterofen (10) mittels einer zweiten Drehvorrichtung (12 bis 14) um eine zur Achse (C-C) der ersten Drehvorrichtung (15 bis 19) quer verlaufende Achse (B-B) motorisch verdrehbar ist und dass am Sinterofen (10) und an der Kühlkammer (50, 60) Türen (11; 51; 61) vorgesehen sind, welche nach Einbringen des Formrahmens (40) und Zurückziehen des Manipulatorsarms (34) verschließbar sind.

2. Rotationsformanlage nach Anspruch 1,
**dadurch gekennzeichnet, dass** der Manipulator (30) einen vertikalen Ständer (33) aufweist, an welchem zwei parallel zueinander gelegene Arme (34) vorgesehen sind, und dass der Formrahmen (40) beidseitig Achsen (45) zum Ankuppeln der Arme (34) im Abstand der an den Armen (34) vorgesehenen Kupplungsaufnahmen (34a) aufweist.

3. Rotationsformanlage nach den Ansprüchen 1 oder 2,
**dadurch gekennzeichnet, dass** der vertikale Ständer (33) des Manipulators (31) auf einem Drehteller (32) angeordnete vertikale Säulen aufweist, an welchen ein Hubschlitten mit radial ausfahrbaren, miteinander gekoppelten, vorzugsweise als Zahnstangen ausgebildeten Arme (34) angeordnet ist.

4. Rotationsformanlage nach den Ansprüchen 1, 2 oder 3,
**dadurch gekennzeichnet, dass** der Manipulator (30) auf einem in Längsrichtung auf Geleisen (38) verfahrbaren Gehäuse (31) mit Laufrollen (37) angeordnet ist und dass beidseitig der Geleise (38) mindestens jeweils zwei Sinteröfen (10, 10') bzw. Kühlkammern (50, 60) und am Kopf der Geleise (38) die Entformstation (70) vorgesehen sind.

5. Rotationsformanlage nach einem der Ansprüche 1 bis 4,
**dadurch gekennzeichnet, dass** die Türen des Sinterofens (10) und der Kühlkammern (50, 60) jeweils aus zwei parallel zur Drehachse (A-A) des Manipulators (30) verschiebbaren Flügeln (11; 51; 61) bestehen.

6. Rotationsformanlage nach einem der Ansprüche 1 bis 5,
**dadurch gekennzeichnet, dass** der Sinterofen (10) eine drehbare Kammer mit senkrecht zur Drehachse (B-B) und parallel zueinander angeordneten Antriebsscheiben (12) besitzt, welche auf ortsfesten Lagerrollen (13) gelagert sind, von welchen wenigstens eine von einem Motor (14) angetrieben ist.

7. Rotationsformanlage nach Anspruch 6,
**dadurch gekennzeichnet, dass** der drehbaren Kammer des Sinterofens (10) eine stationäre Heiz- und Belüftungsvorrichtung (20) zugeordnet ist, deren Auslass an der der Kammertür gegenüberliegenden Seite über eine gasdichte, die Drehung der Kammer erlaubende Dichtung, vorzugsweise eine Lamellendichtung, in die Kammer mündet.

8. Rotationsformanlage nach einem der Ansprüche 1 bis 7,
**dadurch gekennzeichnet, dass** die Entformstation (70) zwei Auflager (73) im Abstand der Achsen (45) des Formrahmens (40) aufweist, in welche der Formrahmen (40) mit seinen beidseitigen Achsen (45) nach Trennung der vom Formrahmen (40) getragenen zweiteiligen Form (41, 42) und Anheben mittels der Manipulatorarme (34) einlegbar ist.

9. Rotationsformanlage nach Anspruch 8,
**dadurch gekennzeichnet, dass** die Entformstation (70) eine Vorrichtung (75) zur Arretierung einer Formhälfte (41) vor dem Abheben der anderen Formhälfte (42) aufweist.

## Claims

1. A rotational mould system with at least one sintering furnace, a cooling chamber, a de-moulding station and a charging apparatus which is rotatable about a vertical axis and which has at least one radially projecting arm with a rotating drive which carries a mould frame provided with moulds and keeps it in rotary motion, wherein the sintering furnace, the cooling chamber and the de-moulding station are arranged in a circle and the charging apparatus is arranged in the centre of the circle, **characterized in that** the charging apparatus is a manipulator (30) with an arm which is capable of being moved radially and of being displaced vertically and on the free end (34a) of which a coupling for detachable connection to the mould frame (40) is provided, the sintering furnace (10) and the cooling chamber (50, 60) receive first turning apparatus with clamping apparatus (15 to 19; 53; 63) for the mould frames (40), the sintering furnace (10) is capable of being turned in a motorized manner by means of a second turning apparatus (12 to 14) about an axis (B-B) extending transversely to the axis (C-C) of the first turning apparatus (15 to 19), and doors (11; 51; 61), which are capable of being closed after the introduction of the mould frame (40) and the withdrawal of the manipulator arm (34), are provided on the sintering furnace (10) and on the cooling chamber (50, 60).

2. A rotational mould system according to claim 1, **characterized in that** the manipulator (30) has a vertical stand (33) on which two arms (34) situated parallel to each other are provided, and the mould frame (40) has axles (45) on both sides for coupling the arms (34) at a distance from the coupling receiving means (34a) provided on the arms (34).

3. A rotational mould system according to claims 1 or 2, **characterized in that** the vertical stand (33) of the manipulator (31) has vertical pillars which are arranged on a rotary disc (32) and on which is arranged a lifting slide with radially extensible arms (34) which are coupled to each other and which are preferably designed in the form of toothed racks.

4. A rotational mould system according to claims 1, 2 or 3, **characterized in that** the manipulator (30) is arranged on a housing (31) with rollers which is movable on tracks (38) in the longitudinal direction, and at least two sintering furnaces (10, 10') or cooling chambers (50, 60) respectively are provided in each case on both sides of the tracks (38) and the de-moulding station (70) is provided at the head of the tracks (38).

5. A rotational mould system according to any one of claims 1 to 4, **characterized in that** the doors of the sintering furnace (10) and of the cooling chamber (50, 60) in each case comprises two leaves (11; 51; 61) displaceable parallel to the axis of rotation (A-A) of the manipulator (30).

6. A rotational mould system according to any one of claims 1 to 5, **characterized in that** the sintering furnace (10) has a rotatable chamber with driving pulleys (12) which are arranged at a right angle to the axis of rotation (B-B) and parallel to each other and which are mounted on stationary bearing rollers (13), at least one of which is driven by a motor (14).

7. A rotational mould system according to claim 6, **characterized in that** the rotatable chamber of the sintering furnace (10) has associated with it a stationary heating and aerating apparatus (20), the outlet of which opens into the chamber on the side opposite the chamber door by way of a gas-tight seal, preferably a lamellar seal, which allows the chamber to rotate.

8. A rotational mould system according to any one of claims 1 to 7, **characterized in that** the de-moulding station (70) has two supports (73) at a distance from the axes (45) of the mould frame (40), into which supports (73) the mould frame (40) is capable of being inserted with the axles (45) on both sides thereof after the separation of the two-part mould (41, 42) carried by the mould frame (40) and lifting off by means of the manipulator arms (34).

9. A rotational mould system according to claim 8, **characterized in that** the de-moulding station (70) has an apparatus (75) for locking one mould half (41) before the other mould half (42) is lifted off.

## Revendications

1. Installation de rotomoulage comportant au moins un four de frittage, une chambre de refroidissement, un poste de démoulage et un dispositif de revêtement tournant autour d'un axe vertical ainsi qu'au moins un bras radialement en saillie et muni d'un moyen d'entraînement de rotation, qui porte un châssis de moule avec le moule et maintient celui-ci en rotation,
le four de frittage, la chambre de refroidissement et le poste de démoulage étant installés en cercle et le dispositif d'alimentation se trouvant au centre du cercle,
installation **caractérisée en ce que**
- le dispositif d'alimentation comporte un manipulateur (30) muni d'un bras mobile radialement et réglable en hauteur dont l'extrémité libre (34a) comporte un moyen d'attelage pour être relié de manière amovible au châssis de moule (40),
- le four de frittage (10) et la chambre de refroidissement (50, 60) recevant des premiers dispositifs d'entraînement en rotation munis de dispositifs de serrage (15-19 ; 53 ; 63) pour les châssis de moule (40),
- le four de frittage (10) étant entraîné en rotation par un second dispositif d'entraînement en rotation (12-14) autour d'un axe (B-B) transversal à l'axe (C-C) du premier dispositif d'entraînement en rotation (15-19), et
- le four de frittage (10) et la chambre de refroidissement (50, 60) comportent des portes (11 ; 51 ; 61) qui sont refermées après introduction du châssis de moule (40) et retrait du bras de manipulateur (34).

2. Installation de rotomoulage selon la revendication 1,
**caractérisée en ce que**
- le manipulateur (30) comporte un bâti vertical (33) muni de deux bras (34) parallèles, et
- de part et d'autre le châssis de moule (40) comporte des axes (45) pour l'attelage des bras (34) à distance des prises d'attelage (34a) prévues sur les bras (34).

3. Installation de rotomoulage selon la revendication 1 ou 2,
**caractérisée en ce que**
le bâti vertical (33) du manipulateur (31) comporte des colonnes verticales installées sur un plateau tournant (32), et munies d'un chariot de levage avec des bras (34) déployables radialement, couplés les uns aux autres et réalisés de préférence sous la forme de crémaillère.

4. Installation de rotomoulage selon les revendications 1, 2 ou 3
**caractérisée en ce que**
le manipulateur (30) est prévu sur un boîtier (31) muni de galets de roulement (37), mobiles dans la direction longitudinale sur des rails (38), de part et d'autre des rails (38), il y a au moins à chaque fois deux fours de frittage (10, 10') ou des chambres de refroidissement (50, 60) et le poste de démoulage (70) est situé à l'extrémité des rails (38).

5. Installation de rotomoulage selon l'une des revendications 1 à 4,
**caractérisée en ce que**
les portes du four de frittage (10) et des chambres de refroidissement (50, 60) se composent chacune de deux parties (11 ; 51 ; 61) coulissant parallèlement à l'axe de rotation (A-A) du bras de manipulateur (30).

6. Installation de rotomoulage selon l'une des revendications 1 à 5,
**caractérisée en ce que**
le four de frittage (10) comporte une chambre rotative avec des disques d'entraînement (12) perpendiculaires à l'axe de rotation (B-B) et parallèles entre eux, ces disques étant montés sur des paliers à galets (13), fixes, dont au moins l'un est entraîné par un moteur (14).

7. Installation de rotomoulage selon la revendication 6,
**caractérisée en ce que**
la chambre rotative du four de frittage (10) comporte un dispositif de chauffage et de ventilation (20), fixe, dont la sortie débouche dans la chambre, par une sortie sur le côté opposé à la porte de la chambre avec un joint étanche au gaz permettant la rotation de la chambre, le joint étant de préférence un joint à lamelles.

8. Installation de rotomoulage selon l'une des revendications 1 à 7,
**caractérisée en ce que**
le poste de démoulage (70) comporte deux paliers (73) écartés des axes (45) du châssis de moule (40) pour recevoir les deux axes (45) du châssis (40), des deux côtés, après séparation du moule en deux parties (41, 42) porté par le châssis (40) et soulèvement à l'aide des bras de manipulateur (34).

9. Installation de rotomoulage selon la revendication 8,
**caractérisée en ce que**
le poste de démoulage (70) comporte un dispositif (75) pour bloquer une moitié de moule (41) avant le soulèvement de l'autre moitié de moule (42).
